(19) Europäisches Patentamt / European Patent Office / Office européen des brevets

(11) **EP 2 635 541 B1**

(12) **FASCICULE DE BREVET EUROPEEN**

(45) Date de publication et mention de la délivrance du brevet:
**07.03.2018 Bulletin 2018/10**

(21) Numéro de dépôt: **11799744.5**

(22) Date de dépôt: **02.11.2011**

(51) Int Cl.:
*C03C 25/32* [(2018.01)]  *C09J 103/02* [(2006.01)]
*C09D 131/04* [(2006.01)]  *C08J 5/24* [(2006.01)]
*D04H 1/42* [(2012.01)]  *D04H 1/58* [(2012.01)]

(86) Numéro de dépôt international:
**PCT/FR2011/052557**

(87) Numéro de publication internationale:
**WO 2012/059687 (10.05.2012 Gazette 2012/19)**

(54) **LIANT POUR MAT DE FIBRES, NOTAMMENT MINERALES, ET PRODUITS OBTENUS.**

BINDEMITTEL FÜR FASERMATTEN, INSBESONDERE ANORGANISCHE FASERN, UND RESULTIERENDE PRODUKTE

BINDER FOR MAT FIBRES, IN PARTICULAR INORGANIC FIBRES, AND RESULTING PRODUCTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2010 FR 1058992**

(43) Date de publication de la demande:
**11.09.2013 Bulletin 2013/37**

(73) Titulaire: **SAINT-GOBAIN ISOVER**
**92400 Courbevoie (FR)**

(72) Inventeurs:
• **VARAGNAT, Matthieu**
  **F-75018 Paris (FR)**
• **JAFFRENNOU, Boris**
  **F-75019 Paris (FR)**
• **CHUDA, Katarzyna**
  **F-94800 Villejuif (FR)**
• **LAMOU, Said**
  **NL-4817 DD Breda (NL)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A2- 2 192 153**    **WO-A1-2006/120523**
**WO-A2-2009/080938**    **US-A1- 2005 215 153**
**US-A1- 2007 123 680**

EP 2 635 541 B1

**EP 2 635 541 B1**

**Description**

La présente invention se rapporte au domaine des mats comprenant des fibres, en particulier minérales, liées par un liant organique exempt de formaldéhyde.

L'invention concerne plus particulièrement un liant apte à réticuler thermiquement qui renferme au moins un monosaccharide et/ou un polysaccharide, au moins un acide organique polycarboxylique ayant une masse molaire inférieure à 1000 et au moins un homopolymère ou un copolymère d'acétate de vinyle, et les mats de fibres minérales, notamment de verre ou de roche, qui en résultent.

Les mats de fibres minérales (aussi appelés « intissés » ou « voiles ») peuvent être fabriqués selon les procédés connus opérant par voie sèche ou par voie humide.

Dans le procédé par voie sèche, de la matière minérale fondue contenue dans un four est acheminée vers un ensemble de filières à partir desquelles des filaments s'écoulent par gravité et sont étirés par un fluide gazeux. Les filaments minéraux sont récoltés sur un convoyeur où ils s'entremêlent en formant un mat.

Sur la face supérieure du mat ainsi formé, on applique un liant à l'aide d'un dispositif adapté, le plus souvent opérant par dépôt par rideau, et on élimine l'excès de liant par aspiration au niveau de la face opposée. Le mat entre ensuite dans un dispositif contenant de l'air chaud dont la température, de l'ordre de 200 à 250°C, est adaptée pour éliminer l'eau et réticuler le liant en un temps très court, de l'ordre d'une dizaine de secondes à 1 minute, puis le mat de fibres minérales est collecté sous la forme d'un enroulement.

Dans le procédé par voie humide, le mat est obtenu à partir d'une dispersion aqueuse de fibres minérales coupées qui est déposée au moyen d'une tête de formage sur un convoyeur muni de perforations et l'eau est extraite à travers le convoyeur grâce à un caisson d'aspiration. Les fibres minérales coupées restant sur le convoyeur forment un mat qui est traité dans les mêmes conditions que celles décrites pour le procédé par voie sèche.

Dans les procédés précités, le liant a pour fonction de lier les fibres minérales entre-elles et de conférer au mat qui les contient des propriétés mécaniques adaptées à l'usage désiré, notamment une rigidité suffisante pour pouvoir être manipulé facilement sans risque notamment qu'il puisse être déchiré.

Le liant à appliquer sur les fibres minérales se présente généralement sous la forme d'une solution aqueuse renfermant au moins une résine thermodurcissable et des additifs tels qu'un catalyseur de réticulation de la résine, un silane promoteur d'adhérence, un hydrofugeant, ...

Les résines thermodurcissables les plus couramment utilisées sont des résines à base de formaldéhyde, notamment des résines phénoliques appartenant à la famille des résols, des résines urée-formaldéhyde et des résines mélamine-formaldéhyde. Ces résines ont une bonne aptitude à réticuler dans les conditions thermiques précitées, sont solubles dans l'eau, possèdent une bonne affinité pour les fibres minérales et sont en outre relativement peu coûteuses.

Or, ces résines sont susceptibles de contenir du formaldéhyde libre dont la présence n'est pas souhaitée du fait des effets indésirables au regard de la santé humaine et de l'environnement. Depuis plusieurs années, la réglementation en matière de protection de l'environnement devient plus contraignante et oblige les fabricants de résine et de mats de fibres à rechercher des solutions permettant d'abaisser encore le taux de formaldéhyde libre.

Des solutions de remplacement des résines à base de formaldéhyde pour lier des fibres minérales sont connues et se fondent sur l'emploi d'un polymère d'acide carboxylique, notamment d'acide acrylique, en combinaison avec un β-hydroxyiamide et un acide carboxylique monomérique au moins trifonctionnel (US 5 340 868).

Il a été proposé des compositions adhésives comprenant un polymère polycarboxylique, un polyol et un catalyseur, lequel catalyseur est un catalyseur contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689).

Il a aussi été décrit des compositions adhésives comprenant une alcanolamine renfermant au moins deux groupements hydroxyle et un polymère polycarboxylique (US 6 071 994, US 6 099 773, US 6 146 746, US 2002/0091185) associé à un copolymère (US 6 299 936), à un tensioactif cationique, amphotère ou non ionique (US 2002/0188055) ou à un silane (US 2004/0002567).

Dans US 2005/0215153, la composition adhésive est formée à partir d'un pré-liant contenant un polymère d'acide carboxylique et d'un polyol, et d'une dextrine en tant que co-liant.

Par ailleurs, on connaît des compositions adhésives à base de saccharides thermoréticulables.

Dans US 5 895 804, la composition adhésive comprend un polymère polycarboxylique ayant au moins deux groupes fonctionnels acide carboxylique et un poids moléculaire au moins égal à 1000, et un polysaccharide ayant un poids moléculaire au moins égal à 10000.

Dans WO 2009/080938, il est décrit une composition d'encollage pour de la laine minérale ou un voile de fibres minérales comprenant au moins un monosaccharide et/ou au moins un polysaccharide et au moins un acide organique polycarboxylique ayant une masse molaire inférieure ou égale à 1000.

La présente invention a pour but de proposer un liant pour des mats de fibres, notamment minérales, et en particulier de verre ou de roche, qui est exempt de formaldéhyde, qui présente une résistance au vieillissement en milieu humide améliorée tout en conservant de bonnes propriétés mécaniques, notamment une bonne résistance en traction.

Pour atteindre ce but, la présente invention propose un liant qui comprend

- au moins un monosaccharide et/ou au moins un polysaccharide,
- au moins un acide organique polycarboxylique ayant une masse molaire inférieure ou égale à 1000,
- et au moins un homopolymère ou un copolymère d'acétate de vinyle.

Le monosaccharide est choisi parmi les monosaccharides renfermant 3 à 8 atomes de carbone, de préférence les aldoses et avantageusement les aldoses contenant 5 à 7 atomes de carbone, notamment naturels (appartenant à la série D). Les aldoses particulièrement préférés sont les hexoses tels que glucose, le mannose et le galactose.

Le polysaccharide conforme à l'invention peut être tout saccharide constitué d'une pluralité de motifs saccharidiques, de préférence constitué majoritairement (à plus de 50 % en poids) de motifs de glucose. La masse molaire du polysaccharide peut varier dans une large mesure de manière à inclure les dextrines et les amidons, notamment les amidons de masse molaire au moins égale à $10^5$ g/mol et pouvant aller jusqu'à $10^9$ g/mol.

Selon un mode de réalisation préféré, l'invention utilise un mélange de monosaccharide(s) et/ou de polysaccharide(s), en particulier une dextrine, une mélasse ou un mélange contenant de 20 à 80 % en poids d'amidon(s), de préférence 40 à 60 %.

Les dextrines sont des composés répondant à la formule générale $(C_6H_{10}O_5)_n$ obtenus par hydrolyse partielle d'amidon. Les procédés de préparation des dextrines sont connus. Par exemple, les dextrines peuvent être préparées en chauffant ou en séchant à sec un amidon, généralement en présence d'un catalyseur acide, ce qui conduit à la rupture des molécules d'amylose et d'amylopectine qui constituent ledit amidon en produits de masse molaire plus faible. Les dextrines peuvent aussi être obtenues en traitant l'amidon par voie enzymatique avec une ou plusieurs amylases, notamment microbiennes, aptes à hydrolyser les liaisons de l'amidon. La nature du traitement (chimique ou enzymatique) et les conditions d'hydrolyse ont une incidence directe sur la masse molaire moyenne et la distribution des masses molaires de la dextrine.

Les dextrines conformes à l'invention peuvent être obtenues à partir d'amidon ou de dérivés d'amidon d'origine végétale variée, par exemple issues de tubercules tels que la pomme de terre, le manioc, le maranta et la patate douce, issues de graines telles que le blé, le maïs, le seigle, le riz, l'orge, le millet, l'avoine et le sorgho, issues de fruits tels que le marron, la châtaigne, et la noisette, ou issues de légumineuses telles que le pois et le haricot.

On préfère en particulier les dextrines ayant un équivalent en dextrose DE (« Dextrose Equivalent » en anglais) qui varie de 5 à 100, de préférence de 15 à 100, et avantageusement de 15 à 50.

De manière conventionnelle, l'équivalent en dextrose DE est défini par la relation suivante :

$$DE = 100 \times \left( \frac{\text{nombre de liaisons glycosidiques rompues}}{\text{nombre de liaisons glycosidiques dans l'amidon initial}} \right)$$

Les mélasses sont des résidus de raffinage de sucre extrait notamment de la canne et de la betterave qui contiennent une forte teneur en glucides, de l'ordre de 40 à 60 % en poids. L'essentiel des glucides de la mélasse est constitué par du saccharose.

Les mélasses conformes à l'invention renferment de préférence de 45 à 50 % en poids de glucides totaux, exprimés en saccharose.

Les mélasses de betterave sont particulièrement préférées.

De manière particulièrement préférée, l'invention utilise un mélange de glucose et d'amidon(s), ou un mélange de dextrine(s) présentant un DE qui varie de 20 à 40 et d'amidon(s).

Par « acide organique polycarboxylique », on entend un acide organique comprenant au moins deux fonctions carboxyliques, de préférence au plus 4, et avantageusement au plus 3 fonctions carboxyliques.

L'acide organique polycarboxylique joue le rôle d'agent de réticulation ; il est apte à réagir avec le(s) monosaccharide(s) et/ou le(s) polysaccharide(s) sous l'effet de la chaleur pour former des liaisons esters qui conduisent à l'obtention d'un réseau polymérique dans le liant final. Ledit réseau polymérique permet d'établir des liaisons au niveau des points de jonction des fibres minérales dans le mat final.

L'acide organique polycarboxylique est choisi parmi les acides organiques polycarboxyliques présentant une masse molaire inférieure ou égale à 1000, de préférence inférieure ou égale à 750 et avantageusement inférieure ou égale à 500.

De préférence, l'acide organique polycarboxylique est un acide alicyclique, ramifié ou non, saturé ou insaturé, un acide cyclique ou un acide aromatique.

**EP 2 635 541 B1**

L'acide organique polycarboxylique peut être un acide dicarboxylique, par exemple l'acide oxalique, l'acide malonique, l'acide succinique, l'acide glutarique, l'acide adipique, l'acide pimélique, l'acide subérique, l'acide azélaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique, ou un précurseur d'acide dicarboxylique, notamment un anhydride tel que l'anhydride maléique, l'anhydride succinique et l'anhydride phtalique; un acide tricarboxylique, par exemple l'acide citrique, l'acide tricarballylique, l'acide 1,2,4-butanetricarboxylique, l'acide aconitique, l'acide hémiméllitique, l'acide triméllitique et l'acide trimésique ; un acide tétracarboxylique, par exemple l'acide 1,2,3,4-butanetétracarboxylique et l'acide pyroméllitique. On préfère les acides malonique, tartrique et citrique, et mieux encore l'acide citrique.

Le polymère d'acétate de vinyle peut être un homopolymère ou un copolymère, par exemple d'au moins un monomère hydrophobe tel que l'éthylène, le propylène, le butylène, le styrène et le chlorure de vinyle, en particulier un copolymère d'éthylène et d'acétate de vinyle (EVA).

Sans vouloir être liés par une quelconque théorie, les inventeurs pensent que la présence des monomères hydrophobes contribue à diminuer l'affinité du mat pour l'eau et permet au copolymère de pouvoir migrer plus facilement à la surface du mat, ce qui se traduit par une élimination plus rapide de l'eau contenue dans le mat dès les premières secondes du traitement thermique et au final une meilleure réticulation du liant.

Dans le liant, le monosaccharide et/ou le polysaccharide représente 10 à 90 % du poids du mélange constitué par le monosaccharide et/ou le polysaccharide et l'acide organique polycarboxylique, de préférence 20 à 85 %, et avantageusement 30 à 80 %.

De manière préférée comme cela a été indiqué précédemment, au moins 50 % en poids du monosaccharide et/ou du polysaccharide est constitué d'amidon(s), avantageusement en mélange avec du glucose ou une dextrine.

Le polymère d'acétate de vinyle est présent dans le liant à raison de 1 à 15 parts en poids pour 100 parts en poids du mélange constitué par le monosaccharide et/ou le polysaccharide et l'acide organique polycarboxylique, de préférence 2 à 8 parts en poids.

Le liant peut comprendre en outre un catalyseur, acide ou basique, qui a notamment pour fonction d'ajuster la température de début de réticulation.

Le catalyseur peut être choisi parmi les bases et les acides de Lewis, tels que les argiles, la silice colloïdale ou non, les amines organiques, les amines quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un sel d'hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium.

La quantité de catalyseur dans le liant peut représenter jusqu'à 20 % du poids du monosaccharide et/ou du polysaccharide et de l'acide organique polycarboxylique, de préférence jusqu'à 10 %, et avantageusement est au moins égale à 1 %.

Le liant conforme à l'invention peut comprendre en outre les additifs conventionnels ci-après dans les proportions suivantes calculées sur la base de 100 parts en poids de monosaccharide(s) et/ou de polysaccharide(s) et d'acide organique polycarboxylique :

- 0 à 1 part en poids de silane, en particulier un aminosilane, de préférence 0,1 à 0,5 part, et
- 0 à 5 parts en poids d'un silicone, d'une huile végétale ou d'un composé fluoré, de préférence 0,1 à 1 part.

Le rôle des additifs est connu et brièvement rappelé : le silane est un agent de couplage entre les fibres et le liant, et joue également le rôle d'agent anti-vieillissement ; le silicone, l'huile végétale ou le composé fluoré sont des agents hydrofugeants qui ont pour fonction de réduire l'absorption d'eau par le mat de fibres minérales.

Le liant se présente sous la forme d'une émulsion ou d'une dispersion aqueuse qui présente un pH acide, de l'ordre de 1 à 5 selon l'acide organique polycarboxylique utilisé, de préférence supérieur ou égal à 1,5.

Le liant est destiné à être appliqué sur des mats de fibres de toute nature, qu'elles soient minérales et/ou organiques, et préférentiellement minérales. De tels mats de fibres liées par le liant conforme à l'invention constituent aussi un objet de la présente invention.

4

Les fibres minérales peuvent être constituées de verre ou d'une roche, en particulier le basalte, et de préférence de verre.

De manière classique, on dépose le liant sur le mat de fibres minérales (formé par la voie sèche ou la voie humide), puis le mat est traité à une température permettant la réticulation du liant qui devient alors infusible. La réticulation du liant selon l'invention se fait à une température comparable à celle d'une résine conventionnelle contenant du formaldéhyde, qui varie généralement de 200 à 220°C, et pendant une durée très courte, de l'ordre de quelques secondes à 1 minute.

Les fibres minérales sont aussi bien des filaments que des fils composés d'une multitude de filaments liés ensemble, notamment par un ensimage, et des assemblages de tels fils.

Ainsi, selon un premier mode de réalisation, le mat de fibres minérales est composé de filaments minéraux discontinus de longueur pouvant atteindre 150 mm, de préférence variant de 20 et 100 mm et avantageusement de 50 à 70 mm, et ayant un diamètre qui peut varier dans une large mesure, par exemple de 5 à 30 $\mu$m.

Selon un deuxième mode de réalisation, le mat de fibres minérales est composé de fils minéraux.

Les fils minéraux peuvent être des fils composés d'une multitude de filaments minéraux (ou fils de base) ou des assemblages de ces fils de base en stratifils (« rovings » en anglais).

Les fils précités peuvent être des fils sans torsion ou des fils retordus (ou fils textiles), de préférence sans torsion.

Les fils minéraux, notamment de verre, sont généralement coupés à une longueur pouvant aller jusqu'à 100 mm, de préférence variant de 6 à 30 mm, avantageusement de 8 à 20 mm et mieux encore de 10 à 18 mm.

Le diamètre des filaments de verre constituant les fils peut varier dans une large mesure, par exemple 5 à 30 $\mu$m. De la même manière, de larges variations peuvent survenir dans la masse linéique du fil qui peut aller de 34 à 1500 tex.

Le verre entrant dans la constitution des filaments peut être de tout type, par exemple C, E, R ou AR (alcali-résistant). On préfère le verre C.

Les fibres organiques peuvent être des fibres synthétiques ou des fibres naturelles.

A titre d'exemples de fibres synthétiques, on peut citer les fibres à base d'une oléfine telle que le polyéthylène et le polypropylène, d'un polytéréphtalate d'alkylène tel que le polytéréphtalate d'éthylène ou d'un polyester.

A titre d'exemples de fibres naturelles, on peut citer les fibres végétales, notamment de coton, de noix de coco, de sisal, de chanvre ou de lin, et les fibres animales notamment la soie ou la laine.

Le mat peut, le cas échéant, être renforcé par des fibres continues qui sont généralement déposées sur le dispositif de convoyage du mat, dans le sens d'avancement du mat, et réparties sur tout ou partie de la largeur du mat. Ces fibres sont généralement déposées dans l'épaisseur du mat de fibres, notamment minérales, avant l'application du liant.

Les fibres de renforcement peuvent être des fibres minérales et/ou organiques de même nature chimique que les fibres précitées constituant le mat de fibres selon l'invention.

Les fibres de renforcement en verre sont préférées.

Le mat de fibres, notamment minérales, présente généralement une masse surfacique qui varie de 10 à 1100 g/m$^2$, de préférence 30 à 350 g/m$^2$, avantageusement 35 à 60 g/m$^2$.

Le liant représente généralement 10 à 35 % en poids du mat de fibres, notamment minérales, de préférence 13 à 25 %.

En règle générale, les fibres constituant le mat selon l'invention sont constituées à plus de 50 % en poids de fibres minérales, de préférence à plus de 75 % et avantageusement à 100 %. De manière particulièrement préférée, les fibres sont en verre.

Le mat de fibres minérales conforme à la présente invention peut être utilisé dans de nombreuses applications, par exemple en tant que revêtement, à peindre ou non, à appliquer sur les murs et/ou les plafonds, revêtement de surface ou de jointement de panneaux de plâtre ou de ciment, revêtement de surface de produits d'isolation thermique et/ou phonique tels qu'une laine minérale ou une mousse destinée plus particulièrement à l'isolation des toitures, membrane d'étanchéité de revêtement de toiture, notamment de bardeaux ou pour la réalisation de revêtement de sol, notamment une sous-couche acoustique.

L'utilisation du mat conforme à la présente invention en tant que revêtement de surface de produits d'isolation à base de laine minérale s'est révélée particulièrement avantageuse.

Les exemples qui suivent permettent d'illustrer l'invention sans toutefois la limiter.

Dans ces exemples, on mesure la contrainte à la rupture d'un échantillon de 5 cm x 25 cm fixé à une extrémité sur un banc de traction et soumis à une élongation continue de 40 mm/minute. La contrainte à la rupture est exprimée en N/5 cm.

La contrainte à la rupture est mesurée après la fabrication (initiale) et après que l'échantillon a été traité dans des conditions de vieillissement accéléré dans une enceinte chauffé à 50°C sous 98 % d'humidité relative pendant 3 jours, d'une part, et dans de l'eau à 80°C pendant 10 minutes, d'autre part. On exprime le résultat par le pourcentage de rétention qui est égal à : (contrainte à la rupture après traitement/contrainte à la rupture initiale) x 100.

## EXEMPLES 1 A 6

Ces exemples ont pour but de comparer les liants entre eux.

On prépare des liants comprenant les constituants figurant dans le tableau 1 dans des quantités exprimées en parts pondérales de matières solides.

Les liants sont préparés en introduisant les différents constituants dans un récipient contenant de l'eau à la température ambiante, sous agitation modérée. L'amidon est préalablement traité dans un autoclave (130°C; 2 bars).

La teneur en matières solides (extrait sec) des liants est égale à 30 %.

On immerge un microfiltre de fibres de verre (Whatman GF/A, 50 g/m$^2$ ; commercialisé par la société Whatman) dans le liant pendant 30 secondes puis on élimine l'excès par aspiration. Le microfiltre est ensuite traité dans une étuve à 200°C pendant 135 secondes. Au final, le microfiltre contient 45 % de liant.

A titre de comparaison, on a également immergé un microfiltre dans les conditions précitées en utilisant un liant comprenant une résine formo-phénolique traditionnelle de type résol (Référence).

Les propriétés de chaque microfiltre sont données dans le tableau 1.

## EXEMPLES 7 A 10

a) préparation des liants

On prépare des liants comprenant les constituants figurant dans le tableau 2 dans des quantités exprimées en parts pondérales de matières solides dans les conditions des exemples 1 à 6.

La teneur en matières solides (extrait sec) des liants est égale à 30 %

b) fabrication des mats

Dans une installation industrielle de 1,3 m de large, on fabrique un mat de fibres de verre C de 40 g/m$^2$ selon le procédé par voie sèche, ledit mat étant collecté sous la forme d'un rouleau de 200 m de longueur. Le liant est appliqué par dépôt par rideau et représente 15 % en poids du mat final.

A titre de comparaison, on a également préparé un mat dans les conditions précitées en utilisant un liant comprenant une résine formo-phénolique traditionnelle de type résol (Référence).

On découpe deux séries d'échantillons de 5 cm X 25 cm, l'une dans la « direction machine » (la longueur étant disposée dans le sens d'avancement du mat) et l'autre dans la « direction transverse » (à 90° par rapport à la direction précédente). Les résultats mentionnés dans le tableau 2 sont calculés selon la relation suivante :

$$(CR_m + CR_t)/2 \times (40/x)$$

dans laquelle

$CR_m$ est la contrainte à la rupture dans la direction machine, en N/5 cm
$CR_t$ est la contrainte à la rupture dans la direction transverse, en N/5 cm
40 est le grammage visé, en g/m$^2$
x est le grammage mesuré, en g/m$^2$.

Les propriétés de chaque mat sont données dans le tableau 2.

Tableau 1

|  | Ex. 1 | Ex. 2 | Ex. 3 (comp.) | Ex. 4 (comp.) | Ex. 5 (comp.) | Ex. 6 (Réf.) |
|---|---|---|---|---|---|---|
| **Composition du liant** | | | | | | |
| - saccharide | | | | | | |
| dextrine[1] | 31 | 31 | 31 | 31 | 31 | - |
| amidon[2] | 31 | 31 | 31 | 31 | 31 | - |
| - acide citrique | 38 | 38 | 38 | 38 | 38 | - |
| - polymère | | | | | | |
| PVAc[3] | 5 | - | - | - | - | - |
| EVA[4] | - | 5 | - | - | - | - |

(suite)

| Composition du liant | | | | | | |
|---|---|---|---|---|---|---|
| PVOH[5] | - | - | - | 5 | - | - |
| styrène-acrylate[6] | - | - | 5 | - | - | - |
| - catalyseur | | | | | | |
| hydrogénosulfate Na | 5 | 5 | 5 | 5 | 5 | - |
| - silicone[7] | 0,1 | 0,1 | 0,1 | 0,1 | 0,1 | - |
| **Propriétés du microfiltre** | | | | | | |
| Contrainte à la rupture (N/5cm) | | | | | | |
| - initiale | 86 | 98 | 111 | 90 | 99 | 111 |
| - % rétention après vieillissement accéléré | 71 | 75 | 31 | 19 | 55 | 63 |
| - % rétention après traitement dans l'eau | 61 | 45 | 30 | 50 | 35 | 67 |

[1] commercialisé sous la référence Roclys C3072S par Roquette Frères ; masse molaire moyenne en poids : 3510 ; équivalent en dextrose (DE) : 30

[2] commercialisé sous la référence Tackidex G076 par Roquette Frères ; 75 % poids d'amylopectine, 25 % en poids d'amylose

[3] commercialisé sous la référence Vinavil® KA/R par Vinavil

[4] commercialisé sous la référence Vinamul® 3301 par Vinamul

[5] commercialisé sous la référence Mowiol® 4088 par KSE

[6] commercialisé sous la référence Acronal® 280 KD par BASF

[7] commercialisé sous la référence huile de silicone PD633-1 par Govi

Tableau 2

| | Ex. 7 | Ex. 8 (comp.) | Ex. 9 (comp.) | Ex. 10 Réf. |
|---|---|---|---|---|
| **Composition du liant** | | | | |
| - saccharide | | | | |
| dextrine[1] | 31 | 31 | 31 | - |
| amidon[2] | 31 | 31 | 31 | - |
| - acide citrique | 38 | 38 | 38 | - |
| - polymère | | | | |
| PVAc[3] | 5 | - | - | - |
| PVOH[5] | - | - | 5 | - |
| - catalyseur | | | | |
| hydrogénosulfate Na | 5 | 5 | 5 | - |
| - silicone[7] | 0,5 | 0,5 | 0,5 | - |
| - silane[8] | 0,1 | 0,1 | 0,1 | - |
| **Propriétés du mat** | | | | |
| Contrainte à la rupture (N/5cm) | | | | |
| - initiale | 64 | 55 | 68 | 75 |
| - % rétention après vieillissement accéléré | 92 | 86 | 99 | 86 |

(suite)

| Propriétés du mat | | | | |
|---|---|---|---|---|
| - % rétention après traitement dans l'eau | 37 | 6 | 8 | 57 |

(1) commercialisé sous la référence Roclys C3072S par Roquette Frères ; masse molaire moyenne en poids : 3510 ; équivalent en dextrose (DE) : 30

(2) commercialisé sous la référence Tackidex G076 par Roquette Frères ; 75 % poids d'amylopectine, 25 % en poids d'amylose

(3) commercialisé sous la référence Vinavil® KA/R par Vinavil

(4) commercialisé sous la référence Vinamul® 3301 par Vinamul

(5) commercialisé sous la référence Mowiol® 4088 par KSE

(6) commercialisé sous la référence Acronal® 280 KD par BASF

(7) commercialisé sous la référence huile de silicone PD633-1 par Govi

(8) commercialisé sous la référence Silquest® A1100 par Crompton; gamma-aminopropyltriéthoxysilane

## Revendications

1. Liant pour fibres, notamment minérales, en particulier de verre ou de roche, **caractérisé en ce qu'**il comprend

   - au moins un monosaccharide et/ou au moins un polysaccharide,
   - au moins un acide organique polycarboxylique ayant une masse molaire inférieure ou égale à 1000, et
   - au moins un homopolymère ou copolymère d'acétate de vinyle.

2. Liant selon la revendication 1, **caractérisé en ce que** le monosaccharide est choisi parmi les monosaccharides renfermant 3 à 8 atomes de carbone, de préférence 5 à 7.

3. Liant selon la revendication 2, **caractérisé en ce que** le monosaccharide est un hexose tel que le glucose, le mannose et le galactose.

4. Liant selon la revendication 1, **caractérisé en ce que** le polysaccharide est constitué à plus de 50 % de motifs glucose.

5. Liant selon la revendication 4, **caractérisé en ce que** le polysaccharide comprend les dextrines et les amidons, notamment les amidons de masse molaire au moins égale à $10^5$ g/mol et pouvant aller jusqu'à $10^9$ g/mol.

6. Liant selon l'une des revendications 1 à 5, **caractérisé en ce qu'**il comprend un mélange de monosaccharide(s) et/ou de polysaccharide(s), en particulier une dextrine, une mélasse ou un mélange contenant de 20 à 80 % en poids d'amidon(s).

7. Liant selon la revendication 6, **caractérisé en ce que** la dextrine présente un équivalent en dextrose qui varie de 5 à 100, de préférence de 15 à 100, et avantageusement de 15 à 50.

8. Liant selon l'une des revendications 1 à 7, **caractérisé en ce que** l'acide organique polycarboxylique comprend au moins deux fonctions carboxyliques, de préférence au plus 4, et avantageusement au plus 3 fonctions carboxyliques.

9. Liant selon la revendication 8, **caractérisé en ce que** l'acide présente une masse molaire inférieure ou égale à 750 et de préférence inférieure ou égale à 500.

10. Liant selon l'une des revendications 1 à 9, **caractérisé en ce que** l'acide organique polycarboxylique est l'acide malonique, l'acide tartrique, ou l'acide citrique, de préférence l'acide citrique.

11. Liant selon l'une des revendications 1 à 10, **caractérisé en ce que** le copolymère d'acétate de vinyle est un copolymère d'acétate de vinyle et d'au moins un monomère hydrophobe tel que l'éthylène, le propylène, le butylène, le styrène et le chlorure de vinyle, de préférence un copolymère d'éthylène et d'acétate de vinyle (EVA).

12. Liant selon l'une des revendications 1 à 11, **caractérisé en ce que** le monosaccharide et/ou le polysaccharide représente 10 à 90 % du poids du mélange constitué par le monosaccharide et/ou le polysaccharide et l'acide organique polycarboxylique, de préférence 20 à 85 %, et avantageusement 30 à 80%.

**13.** Liant selon l'une des revendications 1 à 12, **caractérisé en ce que** le polymère d'acétate de vinyle est présent à raison de 1 à 15 parts pour 100 parts en poids du mélange constitué par le monosaccharide et/ou le polysaccharide et l'acide organique polycarboxylique, de préférence 2 à 8 parts en poids.

**14.** Liant selon l'une des revendications 1 à 13, **caractérisé en ce qu'**il comprend en outre un catalyseur choisi parmi les acides et les bases de Lewis, les composés contenant du phosphore et les composés contenant du fluor et du bore.

**15.** Liant selon l'une des revendications 1 à 14, **caractérisé en ce que** le catalyseur représente jusqu'à 20 % du poids du monosaccharide et/ou du polysaccharide et de l'acide organique polycarboxylique, de préférence jusqu'à 10 % et avantageusement au moins 1 %.

**16.** Liant selon l'une des revendications 1 à 15, **caractérisé en ce qu'**il comprend en outre les additifs ci-après dans les proportions suivantes calculées sur la base de 100 parts en poids de monosaccharide et/ou de polysaccharide et d'acide organique polycarboxylique :

- 0 à 1 part de silane, en particulier un aminosilane, de préférence 0,1 et 0,5 part, et
- 0 à 5 parts d'un silicone, d'une huile végétale ou d'un composé fluoré, de préférence 0,1 à 1 part.

**17.** Mat à base de fibres comprenant un liant selon l'une des revendications 1 à 16.

**18.** Mat selon la revendication 17, **caractérisé en ce que** les fibres sont des fibres minérales, notamment de verre ou de roche, en particulier de basalte, ou des fibres organiques, synthétiques ou naturelles.

**19.** Mat selon la revendication 17 ou 18, **caractérisé en ce que** les fibres sont sous la forme de filaments minéraux discontinus, de fils minéraux composés d'une multitude de filaments minéraux (fils de base) ou d'assemblages de ces fils de base en stratifils.

**20.** Mat selon l'une des revendications 17 à 19, **caractérisé en ce qu'**il présente une masse surfacique qui varie de 10 à 1100 g/m$^2$, de préférence 30 à 350 g/m$^2$, avantageusement 35 à 60 g/m$^2$.

**21.** Mat selon l'une des revendications 17 à 19, **caractérisé en ce que** le liant représente 10 à 35 % en poids du mat de fibres, notamment minérales, de préférence 13 à 25 %.

**22.** Mat selon l'une des revendications 17 à 20, **caractérisé en ce que** les fibres sont constituées à plus de 50 % en poids de fibres minérales, de préférence à plus de 75 % et avantageusement à 100 %.

**23.** Mat selon la revendication 22, **caractérisé en ce que** les fibres sont en verre.


**Patentansprüche**

**1.** Bindemittel für Fasern, insbesondere Mineralfasern, besonders aus Glas oder aus Stein, **dadurch gekennzeichnet, dass** es umfasst:

- mindestens ein Monosaccharid und/oder mindestens ein Polysaccharid,
- mindestens eine organische Polycarbonsäure mit einer Molmasse von weniger als oder gleich 1000, und
- mindestens ein Vinylacetat-Homopolymer oder -Copolymer.

**2.** Bindemittel nach Anspruch 1, **dadurch gekennzeichnet, dass** das Monosaccharid aus den Monosacchariden mit 3 bis 8, vorzugsweise 5 bis 7 Kohlenstoffatomen ausgewählt ist.

**3.** Bindemittel nach Anspruch 2, **dadurch gekennzeichnet, dass** das Monosaccharid eine Hexose wie zum Beispiel Glucose, Mannose und Galactose ist.

**4.** Bindemittel nach Anspruch 1, **dadurch gekennzeichnet, dass** das Polysaccharid zu mehr als 50 % aus Glucose-Einheiten gebildet ist.

5. Bindemittel nach Anspruch 4, **dadurch gekennzeichnet, dass** das Polysaccharid Dextrine und Stärken umfasst, insbesondere Stärken mit einer Molmasse von mindestens $10^5$ g/mol und möglicherweise bis zu $10^9$ g/mol.

6. Bindemittel nach einem der Ansprüche 1 bis 5, **dadurch gekennzeichnet, dass** es ein Gemisch aus Monosaccharid(en) und/oder Polysaccharid(en) umfasst, insbesondere ein Dextrin, eine Melasse oder ein Gemisch, enthaltend von 20 bis 80 Gew.-% Stärke(n).

7. Bindemittel nach Anspruch 6, **dadurch gekennzeichnet, dass** das Dextrin ein Dextrose-Äquivalent von 5 bis 100, vorzugsweise von 15 bis 100 und vorteilhafterweise von 15 bis 50, hat.

8. Bindemittel nach einem der Ansprüche 1 bis 7, **dadurch gekennzeichnet, dass** die organische Polycarbonsäure mindestens zwei Carboxylfunktionen, vorzugsweise mindestens 4 und vorteilhafterweise mindestens 3 Carboxylfunktionen umfasst.

9. Bindemittel nach Anspruch 8, **dadurch gekennzeichnet, dass** die Säure eine Molmasse von weniger als oder gleich 750 und vorzugsweise weniger als oder gleich 500 aufweist.

10. Bindemittel nach einem der Ansprüche 1 bis 9, **dadurch gekennzeichnet, dass** die organische Polycarbonsäure Malonsäure, Weinsäure oder Citronensäure, vorzugsweise Citronensäure, ist.

11. Bindemittel nach einem der Ansprüche 1 bis 10, **dadurch gekennzeichnet, dass** das Vinylacetat-Copolymer ein Copolymer aus Vinylacetat und mindestens einem hydrophoben Monomer wie zum Beispiel Ethylen, Propylen, Butylen, Styrol und Vinylchlorid, vorzugsweise ein Copolymer aus Ethylen und Vinylacetat (EVA), ist.

12. Bindemittel nach einem der Ansprüche 1 bis 11, **dadurch gekennzeichnet, dass** das Monosaccharid und/oder das Polysaccharid 10 bis 90 %, vorzugsweise 20 bis 85 % und vorteilhafterweise 30 bis 80 % des Gewichts des Gemischs darstellt, das aus dem Monosaccharid und/oder dem Polysaccharid und der organischen Polycarbonsäure besteht.

13. Bindemittel nach einem der Ansprüche 1 bis 12, **dadurch gekennzeichnet, dass** es 1 bis 15 Teile, vorzugsweise 2 bis 8 Gewichtsteile, Vinylacetatpolymer pro 100 Gewichtsteile des Gemischs, das aus dem Monosaccharid und/oder dem Polysaccharid und der organischen Polycarboxylsäure besteht, enthält.

14. Bindemittel nach einem der Ansprüche 1 bis 13, **dadurch gekennzeichnet, dass** es außerdem einen Katalysator enthält, ausgewählt aus den Lewis-Säuren und -Basen, den Phosphor-enthaltenden Verbindungen und den Fluor und Bor enthaltenden Verbindungen.

15. Bindemittel nach einem der Ansprüche 1 bis 14, **dadurch gekennzeichnet, dass** der Katalysator bis zu 20 % des Gewichts des Monosaccharids und/oder des Polysaccharids und der organischen Polycarbonsäure ausmacht, vorzugsweise bis 10 % und vorteilhafterweise mindestens 1 %.

16. Bindemittel nach einem der Ansprüche 1 bis 15, **dadurch gekennzeichnet, dass** es außerdem die nachstehenden Additive in den folgenden Mengen enthält, berechnet auf der Grundlage von 100 Gewichtsteilen Monosaccharid und/oder Polysaccharid und organischer Polycarbonsäure:

- 0 bis 1 Teile, vorzugsweise 0,1 und 0,5 Teile, Silan, insbesondere Aminosilan, und
- 0 bis 5 Teile, vorzugsweise 0,1 bis 1 Teil, eines Silikons, eines pflanzlichen Öls oder einer fluorierten Verbindung.

17. Matte auf der Grundlage von Fasern, umfassend ein Bindemittel nach einem der Ansprüche 1 bis 16.

18. Matte nach Anspruch 17, **dadurch gekennzeichnet, dass** die Fasern Mineralfasern sind, insbesondere Fasern aus Glas oder aus Stein, vor allem aus Basalt, oder aber synthetische oder natürliche organische Fasern.

19. Matte nach Anspruch 17 oder 18, **dadurch gekennzeichnet, dass** die Fasern in Form von diskontinuierlichen mineralischen Filamenten, von mineralischen Fäden, die aus einer Vielzahl von mineralischen Filamenten (Basisfäden) oder Anordnungen dieser Basisfäden als Roving zusammengesetzt sind, vorliegen.

20. Matte nach einem der Ansprüche 17 bis 19, **dadurch gekennzeichnet, dass** sie eine Oberflächenmasse aufweist, die 10 bis 1100 g/m$^2$, vorzugsweise 30 bis 350 g/m$^2$, vorteilhafterweise 35 bis 60 g/m$^2$ beträgt.

21. Matte nach einem der Ansprüche 17 bis 19, **dadurch gekennzeichnet, dass** das Bindemittel 10 bis 35 Gew.-% der Matte aus insbesondere mineralischen Fasern darstellt, vorzugsweise 13 bis 25 %.

22. Matte nach einem der Ansprüche 17 bis 20, **dadurch gekennzeichnet, dass** die Fasern zu mehr als 50 Gew.-% aus mineralischen Fasern bestehen, vorzugsweise zu mehr als 75 % und vorteilhafterweise zu 100 %.

23. Matte nach Anspruch 22, **dadurch gekennzeichnet, dass** die Fasern aus Glas sind.

**Claims**

1. A binder for fibers, especially mineral fibers, in particular glass fibers or rock fibers, **characterized in that** it comprises:

   - at least one monosaccharide and/or at least one polysaccharide;
   - at least one polycarboxylic organic acid with a molar mass of 1000 or less; and
   - at least one vinyl acetate homopolymer or copolymer.

2. The binder as claimed in claim 1, **characterized in that** the monosaccharide is selected from monosaccharides containing 3 to 8, preferably 5 to 7 carbon atoms.

3. The binder as claimed in claim 2, **characterized in that** the monosaccharide is a hexose such as glucose, mannose and galactose.

4. The binder as claimed in claim 1, **characterized in that** more than 50% of the polysaccharide is constituted by glucose units.

5. The binder as claimed in claim 4, **characterized in that** the polysaccharide comprises dextrins and starches, in particular starches with a molar mass of at least $10^5$ g/mol and up to $10^9$ g/mol.

6. The binder as claimed in one of claims 1 to 5, **characterized in that** it comprises a mixture of monosaccharide(s) and/or polysaccharide(s), in particular a dextrin, molasses or a mixture containing 20% to 80% by weight of starch.

7. The binder as claimed in claim 6, **characterized in that** the dextrin has a dextrose equivalent in the range of from 5 to 100, preferably of from 15 to 100 and advantageously in the range of from 15 to 50.

8. The binder as claimed in one of claims 1 to 7, **characterized in that** the polycarboxylic organic acid comprises at least two carboxylic functions, preferably at most 4, and advantageously at most 3 carboxylic functions.

9. The binder as claimed in claim 8, **characterized in that** the acid has a molar mass of 750 or less, preferably 500 or less.

10. The binder as claimed in one of claims 1 to 9, **characterized in that** the polycarboxylic organic acid is malonic acid, tartaric acid or citric acid, preferably citric acid.

11. The binder as claimed in one of claims 1 to 10, **characterized in that** the vinyl acetate copolymer is a copolymer of vinyl acetate and of at least one hydrophobic monomer such as ethylene, propylene, butylene, styrene or vinyl chloride, preferably a copolymer of ethylene and vinyl acetate (EVA).

12. The binder as claimed in one of claims 1 to 11, **characterized in that** the monosaccharide and/or the polysaccharide represents 10% to 90%, preferably 20% to 85%, and advantageously 30% to 80% of the weight of the mixture of the monosaccharide and/or the polysaccharide and the polycarboxylic organic acid.

13. The binder as claimed in one of claims 1 to 12, **characterized in that** the vinyl acetate polymer is present in an amount of 1 to 15 parts per 100 parts by weight of the mixture constituted by the monosaccharide and/or the polysaccharide and the polycarboxylic organic acid, preferably 2 to 8 parts by weight.

14. The binder as claimed in one of claims 1 to 13, **characterized in that** it further comprises a catalyst selected from Lewis acids and bases, compounds containing phosphorus and compounds containing fluorine and boron.

**15.** The binder as claimed in one of claims 1 to 14, **characterized in that** the catalyst represents up to 20% of the weight of the monosaccharide and/or polysaccharide and the polycarboxylic organic acid, preferably up to 10% and advantageously at least 1%.

**16.** The binder as claimed in one of claims 1 to 15, **characterized in that** it further comprises the additives below in the following proportions, calculated on the basis of 100 parts by weight of monosaccharide and/or polysaccharide and of polycarboxylic organic acid:

- 0 to 1 part of silane, in particular an aminosilane, preferably 0.1 to 0.5 part; and
- 0 to 5 parts of a silicone, a vegetable oil or a fluorinated compound, preferably 0.1 to 1 part.

**17.** A fiber-based mat comprising a binder as claimed in one of claims 1 to 16.

**18.** The mat as claimed in claim 17, **characterized in that** the fibers are mineral fibers, especially glass fibers or rock fibers, in particular basalt fibers, or synthetic or natural organic fibers.

**19.** The mat as claimed in claim 17 or claim 18, **characterized in that** the fibers are in the form of discontinuous mineral filaments, mineral threads composed of a multitude of mineral filaments (base threads) or said base threads assembled into rovings.

**20.** The mat as claimed in one of claims 17 to 19, **characterized in that** it has a mass per unit area in the range of from 10 to 1100 $g/m^2$, preferably in the range of from 30 to 350 $g/m^2$, advantageously in the range of from 35 to 60 $g/m^2$.

**21.** The mat as claimed in one of claims 17 to 19, **characterized in that** the binder represents 10% to 35%, preferably 13% to 25% of the weight of the mat of fibers, especially of mineral fibers.

**22.** The mat as claimed in one of claims 17 to 20, **characterized in that** more than 50% by weight, preferably more than 75% and advantageously 100% of the fibers are mineral fibers.

**23.** The mat as claimed in claim 22, **characterized in that** the fibers are glass fibers.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5340868 A
- US 5318990 A
- US 5661213 A
- US 6331350 B
- US 20030008978 A
- US 5977232 A
- US 5932689 A
- US 6071994 A
- US 6099773 A

- US 6146746 A
- US 20020091185 A
- US 6299936 B
- US 20020188055 A
- US 20040002567 A
- US 20050215153 A
- US 5895804 A
- WO 2009080938 A